# EUROPEAN PATENT APPLICATION

(11) **EP 3 747 324 A1**
(43) Date of publication of application: **09.12.2020**
(21) Application number: 19178335.6
(22) Date of filing: 05.06.2019
(51) Int. Cl.: A47J 43/042, A47J 43/07

(54) **A BLEND AND CARRY ASSEMBLY FOR A KITCHEN APPLIANCE**

(71) Applicant: Koninklijke Philips N.V., 5656 AG Eindhoven (NL)
(72) Inventor: VASAGAR, Anandan, 5656 AE Eindhoven (NL)
(74) Representative: de Haan, Poul Erik

(57) **Abstract**

A blend and carry assembly (1000) to be mounted on a base unit (2000) of a kitchen appliance (2000) comprising an inverted bottle (100), a blade assembly (200) and a blade holder (200A), ajar collar (300) having a plurality of buttons (300A₁, 300A₂) associated with a plurality of springs (300B₁, 300B₂) and a stopper bracket (500) is disclosed.

The disclosed blend and carry assembly does not require the micro-switch and lever integrated base unit. Hence, the disclosed blend and carry assembly to be mounted on the kitchen appliance does not require the clearance gap on the base unit. Due to the elimination of this clearance gap, there is no possibility of food ingredients, water, and dust getting accumulated. It overcomes hygiene issues. Further, there is no possibility of water getting into the motor. Hence, it could prevent situations of unsafe operation.

## Description

### FIELD OF THE INVENTION

The present subject matter relates to kitchen appliances and more specifically to a blend and carry assembly for a kitchen appliance.

### BACKGROUND OF THE INVENTION

Blend and carry is an add-on functionality provided on kitchen appliances such as blenders, mixer grinders and juicer mixer grinders. The Blend and carry functionality is used for preparation of fruit and vegetable smoothies, shakes, ice crushing, sauces and dips, and meat mincing. The user has to fill the blender bottle with the required food ingredients, blend the food ingredients and change the blender blade with a lid to carry the blended food/drinks in hand. It is convenient to blend drinks and then take with oneself on one's commute.

The base unit of prior art kitchen appliances (mixer grinders, juicer mixer grinders) are integrated with a micro-switch and a lever mechanism. As an example, US7220049B2 discloses a blender with a safe starting function. The motor unit has an insert groove and a micro-switch. In operation, the blade base is positioned to let the actuating arm slide in the insert groove and press the micro-switch to keep the blender in an ON-power position.

The micro-switch and the associated lever mechanism is provided for safety. It avoids injury to the user that could arise due to accidental/unintentional access to the blade while the blade is rotating. The micro-switch and the associated lever mechanism ensures that the motor does not operate unless the jar encloses the blade completely.

The disadvantage is the clearance gap between the lever and the base unit that houses the motor. Generally, food ingredients, dust and water gets accumulated in and around the clearance gap during blending and cleaning. This could cause hygiene issues. Further, water could get into the motor resulting in unsafe operation.

### SUMMARY OF THE INVENTION

It is an object of the invention to provide a blend and carry assembly that overcomes the above mentioned disadvantages. The invention is defined by the independent claims. The dependent claims define advantageous embodiments.

The object of the invention is realized by providing a blend and carry assembly to be mounted on a base unit of a kitchen appliance that houses a motor. The disclosed blend and carry assembly comprises an inverted bottle, a blade assembly and a blade holder, a jar collar having a plurality of buttons associated with a plurality of springs and a stopper bracket.

The jar collar and the stopper bracket ensures that the blade assembly is tightly coupled and completely enclosed within the inverted bottle. Further, the mounting of the inverted bottle on to the base motor power unit of the kitchen appliance is prevented if the blade assembly is not tightly coupled with the jar collar and the stopper bracket and is not completely enclosed within the inverted bottle. The disclosed mechanism will not allow coupling of the blade to the motor unless the blade assembly is completely assembled with the jar collar and the stopper bracket. Hence, it prevents injury to the user due to accidental/unintentional access to the blade while in operation.

The disclosed blend and carry assembly is provided with an inbuilt safety feature. The inbuilt safety feature avoids injury to the user due to accidental/unintentional access to the rotating blade.

There is no need for the micro-switch and the lever arrangement. Hence, the disclosed blend and carry assembly to be mounted on the kitchen appliance does not require the clearance gap on the base unit that houses the motor. Due to the elimination of this clearance gap, there is no possibility of food ingredients, water, and dust getting accumulated. Hence, it overcomes hygiene issues. Further, there is no possibility of water getting into the motor. Hence, it could prevent situations of unsafe operation.

In an embodiment, an open end of the inverted bottle is integrated with small pitch thread oriented in a first direction and big pitch thread oriented in a second direction, the second direction being different from the first orientation, the big pitch thread disposed above the small pitch thread and configured to engage with the jar collar and the stopper bracket.

The small pitch thread helps to lock the jar collar and seal it with the blade holder. The small pitch thread further helps in activating the plurality of buttons and the associated plurality of springs to overcome the restriction on the movement of the stopper bracket.

The big pitch thread helps to pull up the stopper bracket once the restriction is overcome by the small pitch thread and is assembled onto the jar collar.

In operation, the combination of small pitch thread and the big pitch thread will ensure proper sealing and at the same time ensures proper coupling with the base unit. This is achieved by pulling up the stopper bracket vertically with the help of small pitch and big pitch thread. All these associated functions can be achieved by a single rotation of the inverted bottle.

In a further embodiment, the pitch dimension of the small pitch thread is around 5 mm, the thread angle is around 25 degrees, major diameter is around 90.3 mm and minor diameter is around 84.5 mm. The small pitch thread helps to activate the button 300A₁ 300A₂ which in turn will allow the vertical movement of the stopper bracket. Further, it will help in tightly sealing the jar collar.

In a still further embodiment, the pitch dimension of the big pitch thread is around 48 mm, the thread angle is around 19 degrees, the major diameter is around 93 mm and the minor diameter is around 84.5 mm. The big pitch thread helps to move the stopper bracket after the activation of the button 300A₁ 300A₂.

In alternate embodiments, the minor diameter of the small pitch thread and the big pitch thread could be made different. This could reduce the wall thickness of the inverted bottle.

In a still further embodiment, groove cross section of the small pitch thread and the big pitch thread is at least one of:
unified
metric
square
ACME
Buttress

This embodiment allows the selection of the groove cross section based on use case. As an exemplary illustration, unified and metric is suited for general conditions, square is suited for power transmission and buttress is suited to handle heavy forces in one direction.

In a still further embodiment, the small pitch thread and the big pitch thread are right handed threads and in operation, the small pitch thread lock and engage the inverted bottle to the jar collar and the big pitch thread appropriately push/pull the stopper bracket. The small pitch thread and the big pitch thread are in the same direction in which the motor rotates. Further, grooves are provided on the exterior surface of the inverted bottle for convenient grip while carrying and for locking the inverted bottle on to the jar collar.

In a still further embodiment, the blade assembly and the blade holder comprises blade, blade shaft and coupling. The blades could be interchangeable based on the type of food to be processed.

In a still further embodiment, the jar collar comprises the button associated with a spring disposed at a first location and a second location, the first location being opposite to the second location and the stopper bracket comprises a plurality of horizontal packets and a plurality of vertical grooves configured such that, in operation, the plurality of horizontal packets aid in i) sliding the stopper bracket ii) keeping the stopper bracket in position when the button is not activated and the plurality of vertical grooves guide movement of the stopper bracket up/down. The jar collar is provided with a horizontal flange on which the blade holder could rest.

The object of the invention is further realized by providing a base unit of a kitchen appliance comprising the improved blend and carry assembly.

In an embodiment, the base unit of the kitchen appliance is at least one of:
mixer grinder
juicer mixer grinder
blender

### BRIEF DESCRIPTION OF THE DRAWINGS

The above-mentioned aspects, features and advantages will be further described, by way of example only, with reference to the accompanying drawings in which:
Fig. 1 illustrates an exemplary prior art base unit of a kitchen appliance;
Fig. 2 illustrates an exemplary blend and carry assembly according to an embodiment of the present invention;
Fig. 3 illustrates an exemplary inverted bottle according to an embodiment of the present invention;
Fig. 4 illustrates thread details of an exemplary inverted bottle according to an embodiment of the present invention;
Fig. 5 illustrates different groove cross sections for an exemplary inverted bottle according to an embodiment of the present invention;
Fig. 6 illustrates an exemplary inverted bottle with exemplary right hand threads according to an embodiment of the present invention;
Fig. 7 illustrates an exemplary blade assembly and blade holder according to an embodiment of the present invention;
Fig. 8, Fig. 8A and Fig. 8B illustrates an exemplary jar collar and stopper bracket according to an embodiment of the present invention; and
Fig. 9, Fig. 9A and Fig. 9B illustrates an exemplary working principle of a blend and carry assembly in normal condition and in assembled condition.

### DETAILED DESCRIPTION OF THE EMBODIMENTS

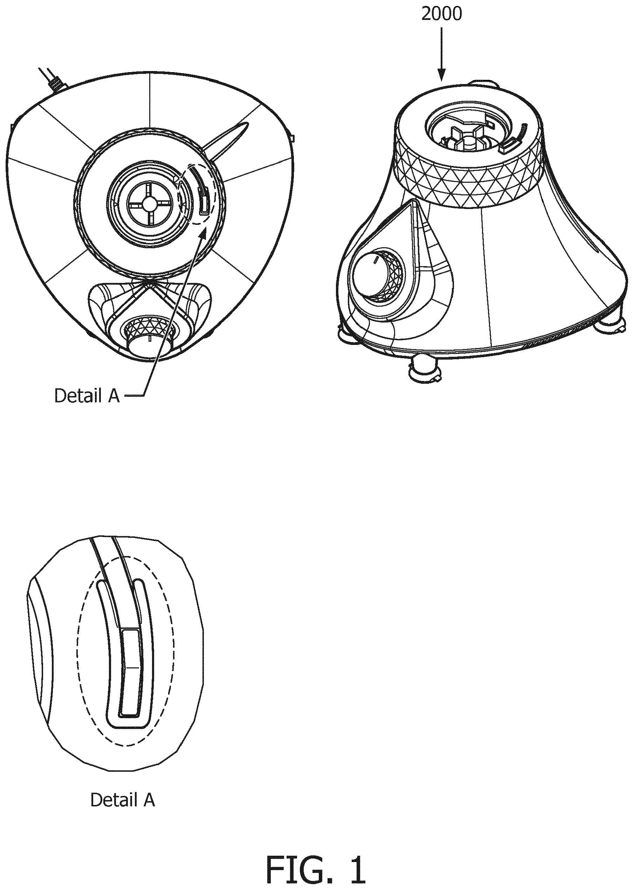

Fig. 1 shows a prior art base unit 2000 of a kitchen appliance. The base unit 2000 could be that of a mixer grinder, juicer mixer grinder or a blender. Blend and carry is an add-on functionality that can be used with the base unit of the kitchen appliance.

The Blend and carry functionality is used for preparation of fruit and vegetable smoothies, shakes, ice crushing, sauces and dips, and meat mincing. The user has to fill the blender bottle with the required food ingredients, blend the food ingredients and change the blender blade with a lid to carry the blended food/drinks in hand. It is convenient to blend drinks and then take with oneself on one's commute.

The base unit 2000 of the kitchen appliance is integrated with a micro-switch and a lever mechanism (Kindly refer to DETAIL A in Fig 1). This is provided for safety in order to avoid injury to the user that could arise due to accidental/unintentional access to the blade while the blade is rotating. The micro-switch and lever mechanism ensures that the motor does not operate unless the blender bottle encloses the blade completely.

The disadvantage is the clearance gap (Kindly refer to DETAL A) between the lever and the base unit that houses the motor. The clearance gap between the lever and the body is required for the movement of the lever to activate the micro-switch.

Generally, food ingredients, dust and water gets accumulated in and around the clearance gap during blending and cleaning. This could cause hygiene issues. Further, water could get into the motor resulting in unsafe operation.

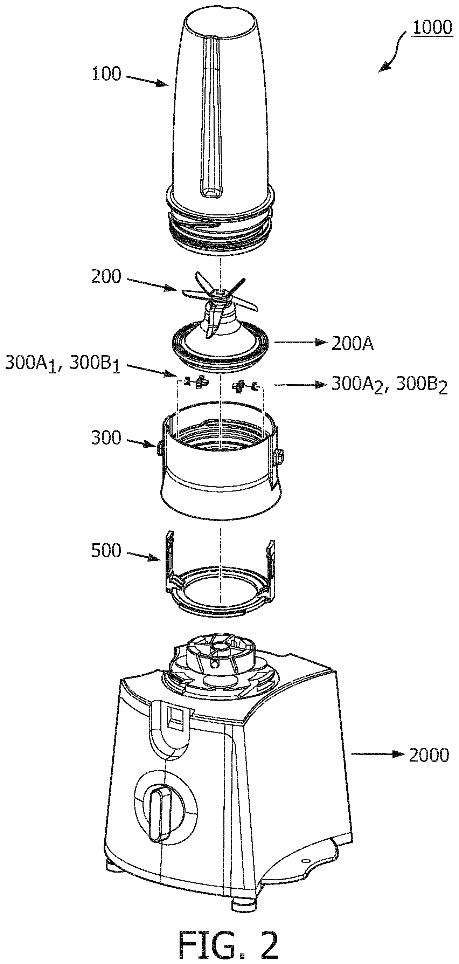

Referring to Fig. 2, the blend and carry assembly 1000 comprises
an inverted bottle 100
a blade assembly 200 and a blade holder 200A
a jar collar 300 and a stopper bracket 500

The jar collar and the stopper bracket ensures that the blade assembly is tightly coupled and completely enclosed within the inverted bottle. Further, the mounting of the inverted bottle on to the base motor power unit of the kitchen appliance is prevented if the blade assembly is not tightly coupled with the jar collar and the stopper bracket and is not completely enclosed within the inverted bottle. The disclosed mechanism will not allow coupling of the blade assembly to the motor unless the blade assembly is completely assembled with the jar collar and the stopper bracket. Hence, it prevents injury to the user due to accidental/unintentional access to the blade while in operation.

The disclosed blend and carry assembly is provided with an inbuilt safety feature. The inbuilt safety feature avoids injury to the user due to accidental/unintentional access to the rotating blade.

There is no need for the micro-switch and the lever arrangement. Hence, the disclosed blend and carry assembly to be mounted on the kitchen appliance does not require the clearance gap on the base unit 2000 that houses the motor. Due to the elimination of this clearance gap, there is no possibility of food ingredients, water, and dust getting accumulated. Hence, it overcomes hygiene issues. Further, there is no possibility of water getting into the motor. Hence, it could prevent situations of unsafe operation.

In some embodiments the blade assembly 200 and the blade holder 200A can be integrated with the jar collar 300.

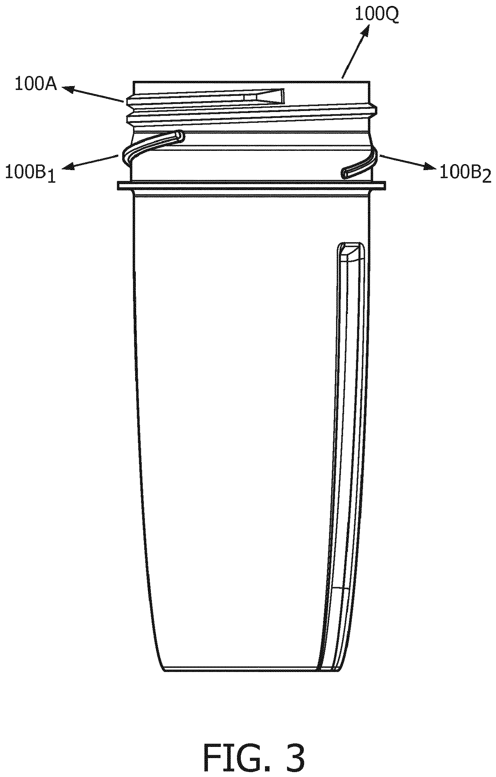

Referring now to Fig. 3, the open end of the inverted bottle 100Q is integrated with small pitch thread 100A oriented in a first direction and big pitch thread 100B₁, 100B₂ oriented in a second direction. The second direction is different from the first direction. The big pitch thread 100B₁, 100B₂ are disposed above the small pitch thread 100A and configured to engage with the jar collar 300 and the stopper bracket 500. The small pitch thread and the big pitch thread are continuous threads. The big pitch threads are of different length and pitch compared to the small pitch thread so that it enables to pull the stopper bracket up.

The small pitch thread helps to lock the jar collar and seal it with the blade holder. The small pitch thread further helps in activating the plurality of buttons and the associated plurality of springs to overcome the restriction on the movement of the stopper bracket.

The big pitch thread helps to pull up the stopper bracket once the restriction is overcome by the small pitch thread and is assembled onto the jar collar.

In operation, the combination of small pitch thread and the big pitch thread will ensure proper sealing and at the same time ensures proper coupling with the base unit. This is achieved by pulling up the stopper bracket vertically with the help of small pitch and big pitch thread. All these associated functions can be achieved by a single rotation of the inverted bottle.

In some embodiments, spring can be used instead of thread to push/pull the stopper bracket. In some other embodiments, press to lock or twist to lock mechanism could also be used. In some embodiments, the big pitch thread 100B₁, 100B₂ can be symmetrical or non-symmetrical.

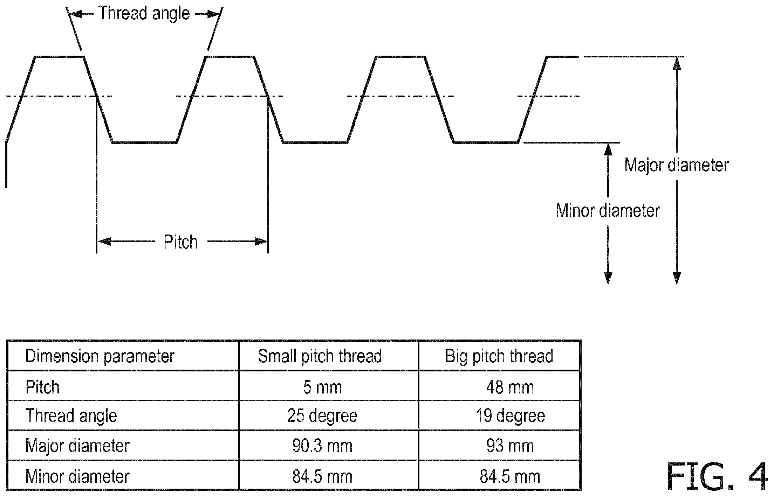

Referring now to Fig. 4, the pitch dimension of the small pitch thread 100A₁ is around 5 mm, the thread angle is around 25 degrees, the major diameter is around 90.3 mm and the minor diameter is around 84.5 mm.

The small pitch thread helps to activate the button 300A₁ 300A₂ which in turn will allow the vertical movement of the stopper bracket. Further, it will help in tightly sealing the jar collar.

The pitch dimension of the big pitch thread 100B₁, 100B₂ is around 48 mm, the thread angle is around 19 degrees, the major diameter is around 93 mm and the minor diameter is around 84.5 mm. The big pitch thread helps to move the stopper bracket after the activation of the button 300A₁ 300A₂.

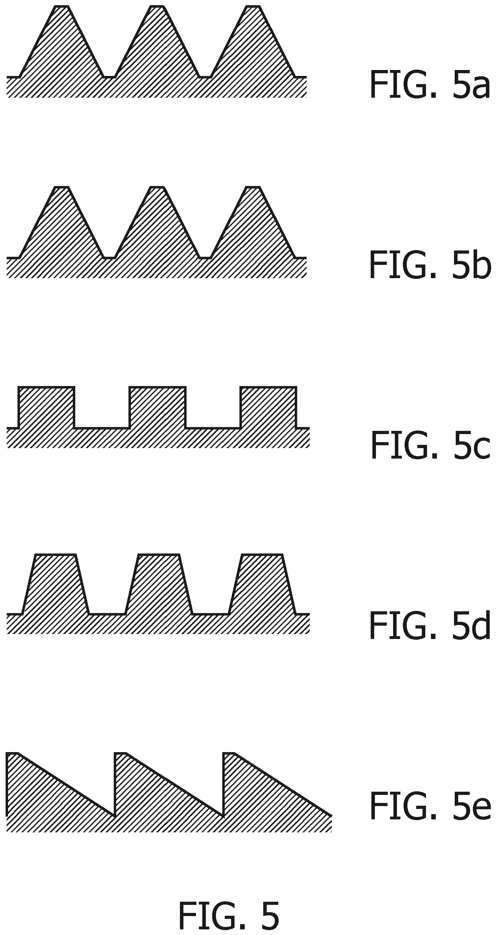

Referring now to Fig. 5, the groove cross section of the small pitch thread 100A₁ and the big pitch thread 100B₁, 100B₂ is at least one of unified (Fig. 5a), metric (Fig. 5b), square (Fig. 5c), ACME (Fig. 5d) and Buttress (Fig. 5e). This allows the selection of the groove cross section based on use case. As an exemplary illustration, unified and metric is suited for general conditions, square is suited for power transmission and buttress is suited to handle heavy forces in one direction.

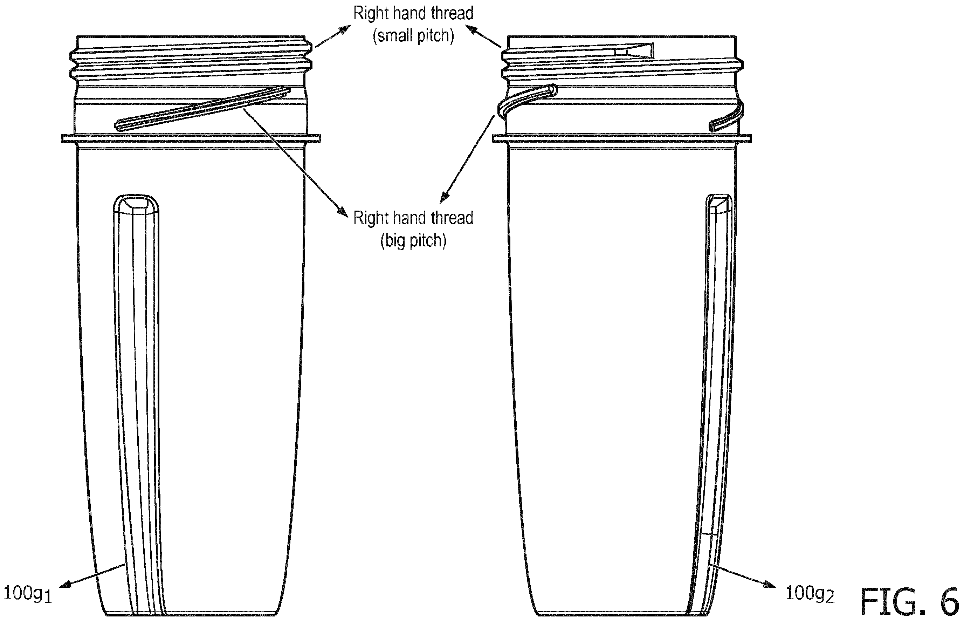

Referring now to Fig. 6, the small pitch thread 100A and the big pitch thread 100B₁, 100B₂ are right handed threads. In operation, the small pitch thread lock and engage the inverted bottle to the jar collar and activates the button 300A₁, 300A₂ enabling the big pitch thread to push/pull the stopper bracket.

The small pitch thread and the big pitch thread are in the same direction in which the motor rotates. Further, grooves 100g₁, 100g₂ are provided on the exterior surface of the inverted bottle for convenient grip while carrying and locking the bottle on to the jar collar.

In essence, the small pitch thread are arranged to seal the inverted bottle and activate the button 300A₁, 300A₂ and the big pitch threads are used to pull the stopper bracket. A single thread cycle enables both the functions namely sealing the inverted bottle and pulling the stopper bracket in the upward direction allowing the mounting of the jar collar onto the base unit.

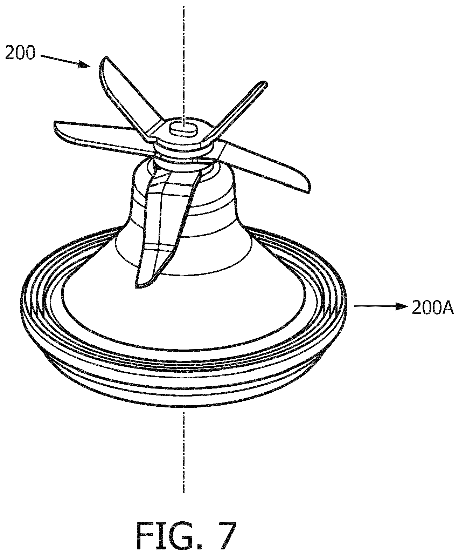

Referring now to Fig. 7, the blade assembly 200 and the blade holder 200A comprises blade, blade shaft and coupling. The blades are interchangeable based on the type of food processing required. In some alternate embodiments, the blade assembly 200 and the blade holder 200A can be integrated with the jar collar 300.

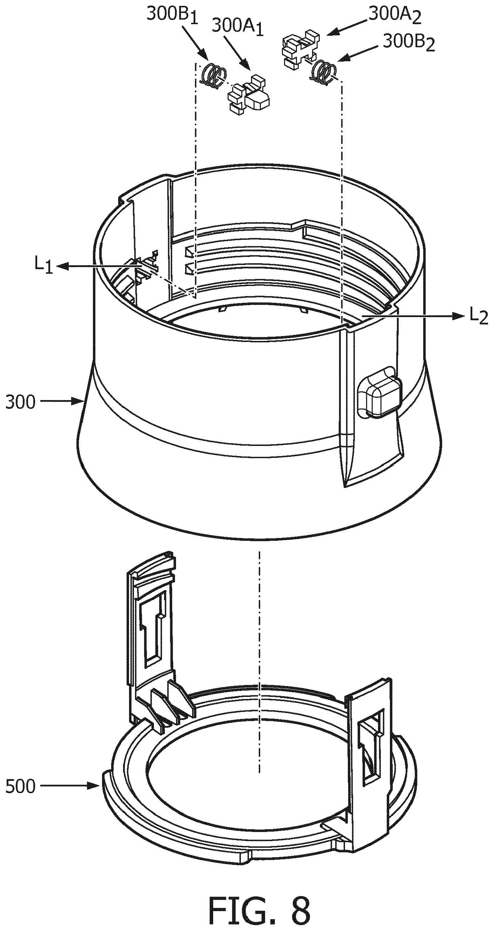

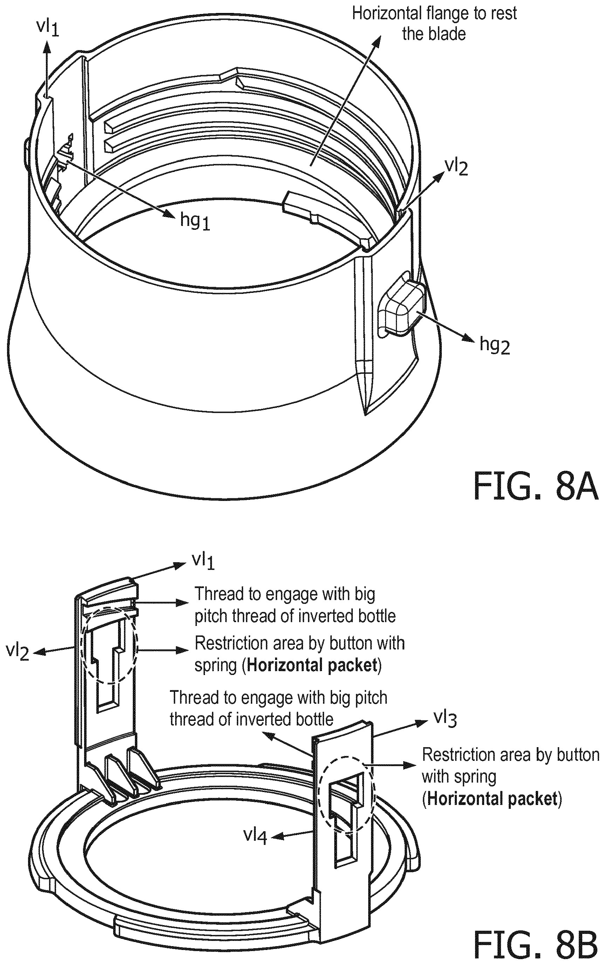

Referring now to Fig. 8, Fig. 8A and Fig. 8B, the jar collar 300 comprises button 300A₁ associated with a spring 300B₁ disposed at a first location L₁, a button 300 A₂ and a spring 300B₂ disposed at a second location L₂, the first location L₁ being opposite to the second location L₂. The spring could be disc spring, conical spring, plastic spring that can withstand or retain the load. The stopper bracket 500 comprises a plurality of horizontal packets hgi, hg₂, and a plurality of vertical grooves vl₁, vl₂, vl₂, vl₄ configured such that, in operation, the plurality of horizontal packets aid in i) sliding the stopper bracket ii) keeping the stopper bracket in position when the button is not activated and the plurality of vertical grooves guide the movement of the stopper bracket up/down. The jar collar is provided with a horizontal flange on which the blade holder could rest.

The base unit 2000 of the kitchen appliance could comprise the disclosed blend and carry assembly 1000. In some embodiments, the base unit could be at least one of mixer grinder, juicer mixer grinder or blender.

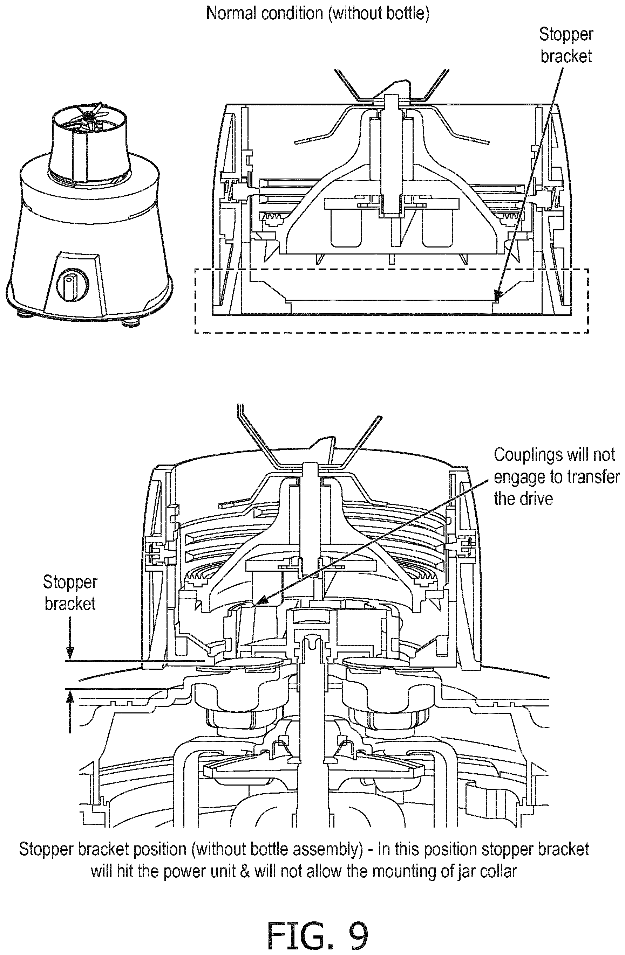

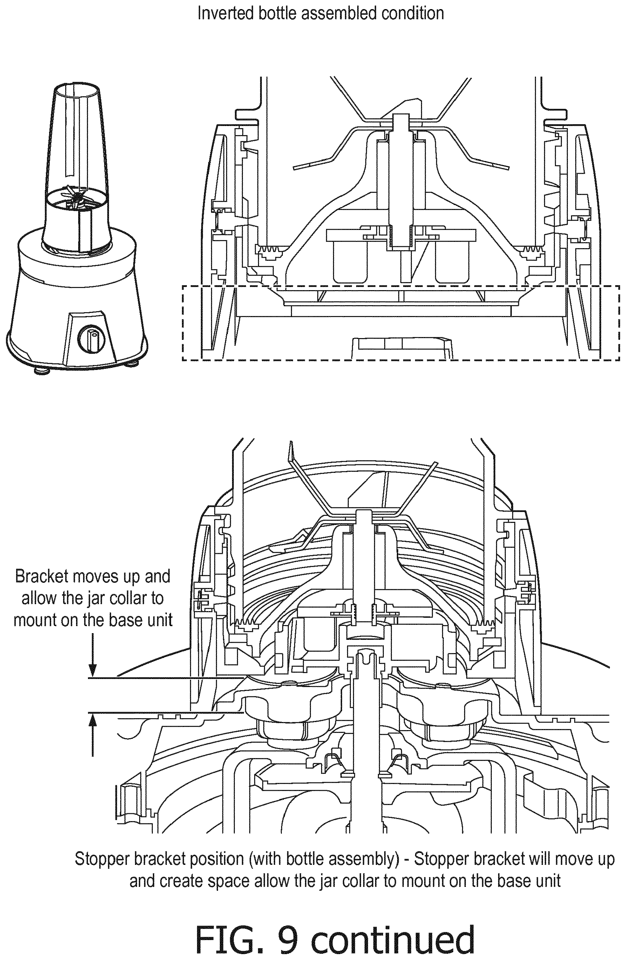

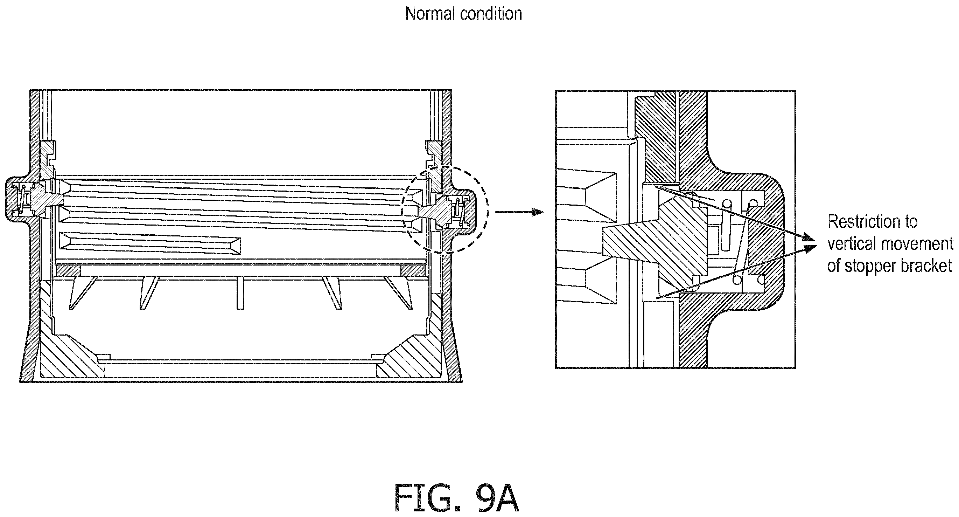

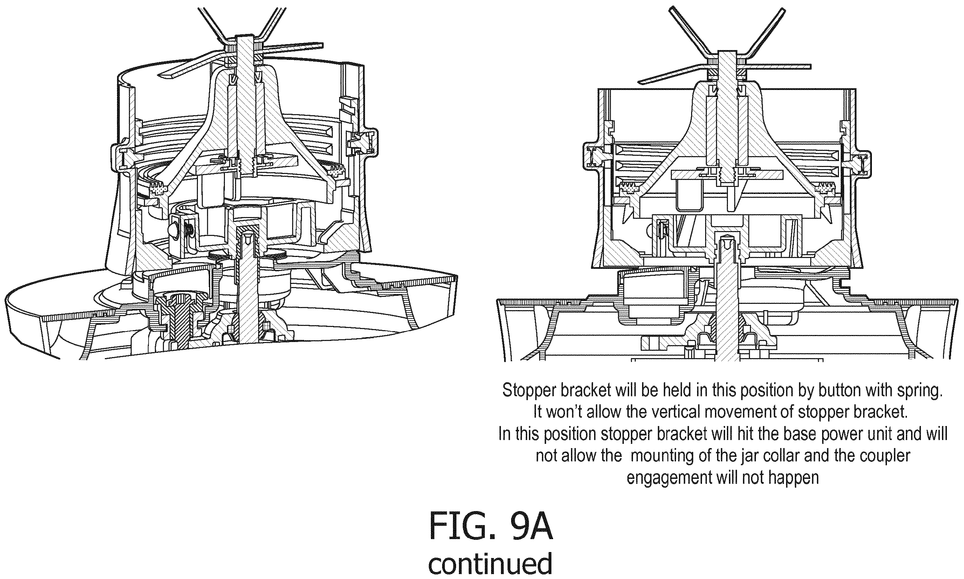

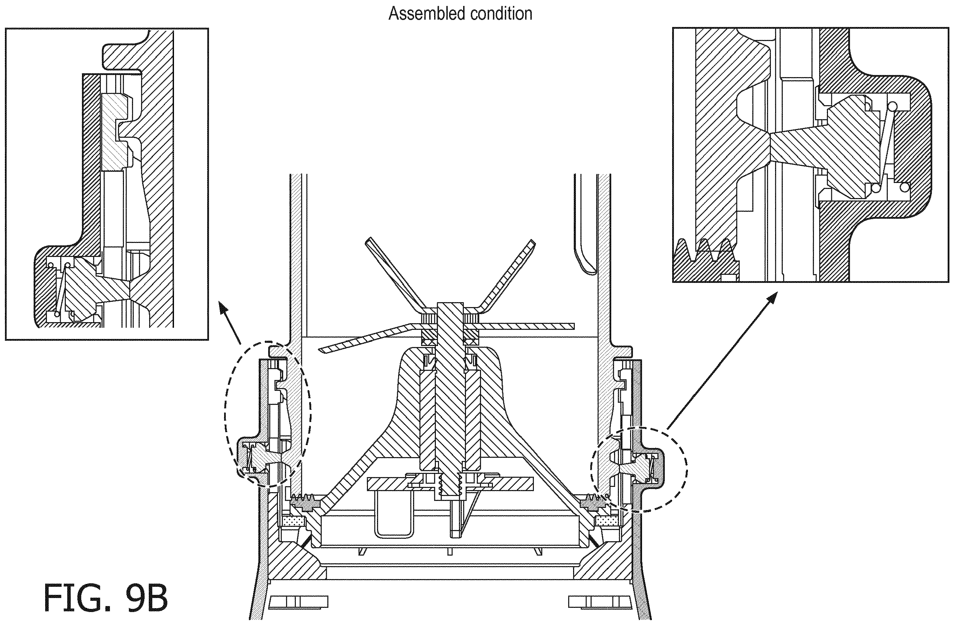

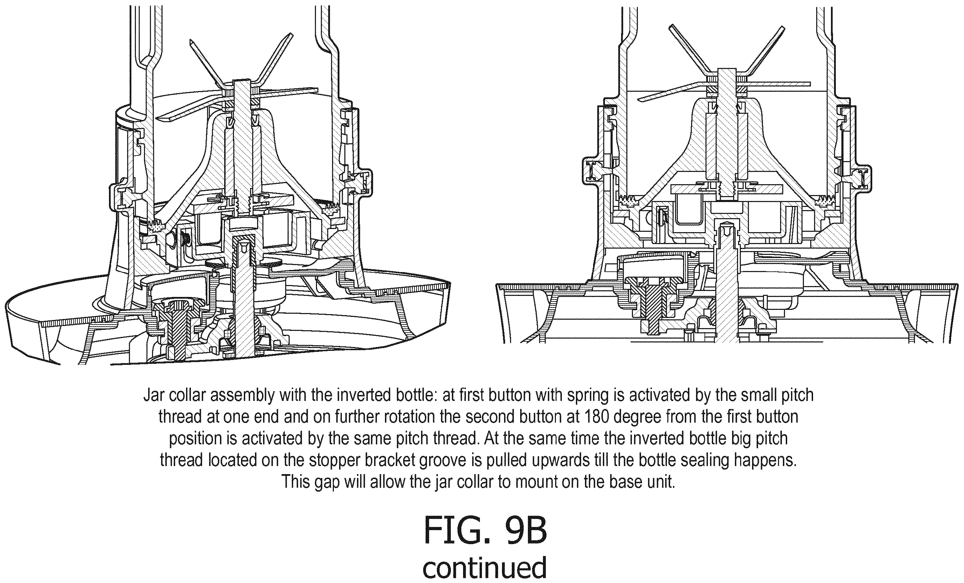

Fig. 9, Fig. 9A and Fig. 9B illustrates construction, assembly, usage and working mode of the disclosed blend and carry assembly.

### Inverted bottle:

The open end of the inverted bottle 100Q is integrated with two different pitch threads, namely small pitch threads 100A and big pitch thread 100B₁, 100B₂ oriented differently. The small pitch thread is used to assemble the inverted bottle with the jar collar by simple rotation. The small pitch thread is used to push the button 300A₁ 300A₂ and the spring 300B₁ 300 B₂ sideways. Above the small pitch thread, the big pitch thread is provided to engage with the stopper bracket 500. Due to this engagement, the stopper bracket is pulled up or pushed down to initial position when the inverted bottle is assembled or disassembled on to the jar collar 300 respectively.

### Stopper bracket with grooves:

The stopper bracket 500 is assembled onto the jar collar using the vertical grooves vl₁, vl₂, vl₃, vl₄. (Refer to Fig. 8A, 8B). The stopper bracket will be at the bottom position (Refer to Fig. 9, Fig. 9A and Fig. 9B) initially when the inverted bottle is not locked with the jar collar. It is held in the bottom position by the buttons 300A₁, 300A₂.

If the user assembles the jar collar onto the base unit 2000 without the inverted bottle 100, the stopper bracket will physically block the access to the jar collar 300 and not allow the user to assemble it.

### Buttons with spring:

The buttons 300A₁, 300A₂ along with the springs 300B₁, 300B₂ act as a restriction for the stopper bracket. The buttons 300A₁, 300A₂ are fixed onto the jar collar along with spring 300B₁, 300B₂ and are activated by the small pitch thread 100A of the inverted bottle while tightening. The spring on the other side of the button is used to return it to the original position once the inverted bottle is removed.

The buttons 300A₁, 300A₂ are assembled on to the jar collar using snap locks to retain the position against the spring force. The button holds the stopper bracket in the bottom position at the open condition and will allow upward movement only when the inverted bottle is assembled.

### Jar collar:

Jar collar holds the buttons 300A₁, 300A₂ and the springs 300B₁, 300B₂ in two locations opposite to each other. As shown in Fig. 8A and Fig. 8B, the horizontal packets hgi, hg₂ aid in sliding the stopper bracket and in keeping the stopper bracket in position when the button is not activated (i.e., normal condition). The vertical grooves vl₁, vl₂, vl₃ vl₄ are provided to support the stopper bracket while moving up/down.

The jar collar is open at both the ends. One end of the opening has thread to assemble with the inverted bottle and the other end has a feature to lock (one has to rotate to lock) on to the base unit of the kitchen appliance.

A horizontal flange is provided to rest the blade holder assembly. Based on the position, partial coupling is avoided even if the user tries to assemble the jar collar and the blade alone.

The integration of the inverted bottle, the buttons with springs, stopper bracket with grooves and the jar collar will prevent the assembly of the jar collar and the blade assembly to the base unit when the inverted bottle is not assembled with the jar collar.

The disclosed blend and carry bottle assembly does not require any slot/opening on the base unit. Therefore, there is no clearance gap and spillage of the food ingredients, water or dust does not create any hygiene issues. Hygiene issues could be prevented.

In some embodiments, well groove type lock or outer lock type (exposed coupler) interface could be used to assemble the blend and carry bottle on to the base unit along with optimized jar collar.

In some embodiments, instead of optimized two vertical columns in stopper bracket, three or more can be accommodated to perform the function.

In some embodiments, instead of two buttons a plurality of buttons could be used to perform the function.

In some embodiments, the guiding cross section/location of grooves for the stopper bracket profile can be in any form

### Assembly:

Step 1: The stopper bracket 500 is mounted on to the jar collar 300 to fit through the vertical grooves vl₁, vl₂, vl₃ and vl₄
Step 2: The button along with the springs located in the jar collar horizontal packets pushes in till it snaps into position. In this condition, the stopper bracket is in bottom position and prevents assembly onto the base unit
Step 3: The blade assembly is placed on the horizontal flange in the jar collar
Step 4: The inverted bottle 100 is threaded onto the jar collar. In this condition, the stopper bracket moves up and creates a gap. The assembly of the inverted bottle onto the base unit is now possible.

### Usage:

Step 1: Food ingredients are fed into the inverted bottle
Step 2: The blade holder assembly is placed on the inverted bottle
Step 3: The jar collar is then threaded onto the inverted bottle
Step 4: The complete blend and carry assembly is then locked onto the base unit
Step 5: The mains power is switched on to realize the blending functionality.

The disclosed blend and carry assembly can be used as an add on attachment on the existing base unit of mixer grinder, juicer mixer grinders, that do not support micro-switch and lever integrated mechanism.

The kitchen appliances occupy space. In the present day mode of living with small apartments or houses in which there is dearth of storage space, it has become increasingly necessary to use compact kitchen appliance whereby one kitchen appliance can do the work of several kitchen appliances. Customers can purchase the blend and carry attachment as a separate unit and start using it on their existing base unit instead of going in for a new standalone blender unit. It is affordable and saves space as the same base unit of mixer grinder/juicer mixer grinder can be used to realize blending functionality. It offers multi functionality and has economic significance.

The disclosed blend and carry assembly makes efficient use of space and accommodates dual functions namely grinding and mixing functions. The disclosed blend and carry assembly is compact in construction and solves the problem of space requirement by providing both functions in one compact kitchen appliance along with an add on blend and carry assembly.

The disclosed blend and carry assembly is easy to handle, clean, and maintain. In prior art solutions, the home maker has to pay individual attention to each one of them namely a blender and a mixer grinder or a juicer mixer grinder. Handling two different individual kitchen appliances could be difficult. The disclosed blend and carry assembly is an add on attachment and there is no need for a separate base unit. Hence, handling becomes easy.

While the subject matter has been illustrated in detail in the drawings and foregoing description, such illustration and description are to be considered illustrative or exemplary and not restrictive; the subject matter is not limited to the disclosed embodiments. Other variations to the disclosed embodiments can be understood and effected by those skilled in the art of practicing the claimed subject matter, from a study of the drawings, the disclosure and the appended claims. Use of the verb "comprise" and its conjugates does not exclude the presence of elements other than those stated in a claim or in the description. Use of the indefinite article "a" or "an" preceding an element or step does not exclude the presence of a plurality of such elements or steps. The Figures and description are to be regarded as illustrative only and do not limit the subject matter. Any reference sign in the claims should not be construed as limiting the scope. The mere fact that certain elements/embodiments are recited in mutually different dependent claims does not indicate that a combination of these elements/embodiments cannot be used to advantage.

## Claims

1. A blend and carry assembly (1000) to be mounted on a base unit (2000) of a kitchen appliance, comprising:
an inverted bottle (100);
a blade assembly (200) and a blade holder (200A); and
a jar collar (300) having a plurality of buttons (300A₁, 300A₂) associated with a plurality of springs (300B₁, 300B₂) and a stopper bracket (500).

2. The blend and carry assembly (1000) as claimed in claim 1, wherein an open end (100Q) of the inverted bottle (100) is integrated with small pitch thread (100A) oriented in a first direction and big pitch thread (100B₁, 100B₂) oriented in a second direction, the second direction being different from the first direction, the big pitch thread (100B₁, 100B₂) disposed above the small pitch thread (100A) and configured to engage with the jar collar (300) and the stopper bracket (500).

3. The blend and carry assembly (1000) as claimed in claim 2, wherein the pitch dimension of the small pitch thread (100A) is around 5 mm, the thread angle is around 25 degrees, major diameter is around 90.3 mm and minor diameter is around 84.5 mm.

4. The blend and carry assembly (1000) as claimed in claim 3, wherein the pitch dimension of the big pitch thread (100B₁, 100B₂) is around 48 mm, the thread angle is around 19 degrees, the major diameter is around 93 mm and the minor diameter is around 84.5 mm.

5. The blend and carry assembly (1000) as claimed in any of the preceding claims, wherein groove cross section of the small pitch thread (100A) and the big pitch thread (100B₁, 100B₂) is at least one of:
unified
metric
square
ACME
Buttress

6. The blend and carry assembly (1000) as claimed in any of the preceding claims, wherein the small pitch thread (100A) and the big pitch thread (100B₁, 100B₂) are right handed threads and in operation, the small pitch thread lock and engage the inverted bottle (100) to the jar collar (300) and activate the plurality of buttons (300A₁, 300A₂) to allow the stopper bracket (500) and the big pitch thread appropriately push/pull the stopper bracket (500).

7. The blend and carry assembly (1000) as claimed in any of the preceding claims, wherein the blade assembly (200) and the blade holder (200A) comprises blade, blade shaft and coupling.

8. The blend and carry assembly (1000) as claimed in any of the preceding claims, wherein:
the jar collar (300) comprises button (300A₁) associated with a spring (300Bi) disposed at a first location (L₁) and button (300A₂) associated with a spring (300B₂) disposed at a second location (L₂), the first location (L₁) being opposite to the second location (L₂); and
the stopper bracket (500) comprises a plurality of horizontal packets (hg₁, hg₂) and a plurality of vertical grooves (vl₁, vl₂, vl₃ vl₄) configured such that, in operation, the plurality of horizontal packets (hg₁, hg₂) aid in i) sliding the stopper bracket ii) keeping the stopper bracket in position when the buttons are not activated and the plurality of vertical grooves (vl₁, vl₂, vl₃,) guide movement of the stopper bracket (500) up/down, the jar collar (300) provided with a horizontal flange on which the blade holder (200A) could rest.

9. A base unit (2000) of a kitchen appliance comprising the blend and carry assembly (1000) as claimed in any one of the preceding claims.

10. The base unit (2000) of the kitchen appliance (2000) as claimed in claim 9, wherein the base unit (2000) is at least one of:
mixer grinder
juicer mixer grinder
blender
